# EUROPEAN PATENT SPECIFICATION

(11) **EP 2 228 213 B1**
(45) Date of publication and mention of the grant of the patent: **27.04.2011**
(21) Application number: 10155909.4
(22) Date of filing: 09.03.2010
(51) Int. Cl.: B32B 38/06, B29C 59/02

(54) **Process for making a coating for furniture**
Verfahren zur Herstellung einer Beschichtung für Möbel
Procédé de fabrication d'un revêtement pour meuble

(30) Priority: 10.03.2009 IT MI20090352
(43) Date of publication of application: 15.09.2010
(73) Proprietor: Flou S.P.A., 20036 Meda (Monza Brianza) (IT)
(72) Inventor: Busnelli, Massimo, 22063 Cantu' (Como) (IT)
(74) Representative: Brasca, Marco

(56) References cited:
- CH-A- 538 563
- US-A- 3 446 685
- US-A- 4 792 371
- US-A- 4 810 558

## Description

The present invention relates to a process for making a coating for furniture. In particular, the present invention concerns a coating used for covering armchairs, sofas, chairs, bed structures, etc.

Coverings are known, for armchairs and sofas for example, that are made of leather and have three-dimensional surface shapes defined by elevations and corresponding depressions adapted to give the surface of the piece of furniture they cover a particular aesthetic effect. For obtaining this effect, the leather layer must be sewn on a padding lying under it so as to enable it to maintain the acquired shape in a steady manner. The seams are located at the depressions and delimit elevations or raised regions between them, which raised regions can take triangular, rhomboidal, square shapes, and so on. The seams are made by hand by qualified artisans or machined by specialised workers. As a result, manufacture of a bed, a sofa or an armchair requires a long time and consequently the production costs are high.

It is also known from document US3446685 a method for making composite cushioning materials which are used in manufacturing home furnishing, automotive interior trim and the like. The cushioning material consists of a resilient pad and a decorative face sheet bonded thereto over the entire surface thereof. A thermosetting adhesive is applied between the opposite faces of the thermoplastic facing sheet and the padding material and thereafter placing the facing sheet and the pad in superimposed relationship between the platens of a heated die assembly with the facing sheet disposed in contact with a die having a preselected contour. The die is closed effecting heating and localized compression of the pad and decorative face sheet.

In this context, the technical task underlying the present invention is to propose a process for making a coating for furniture overcoming the drawbacks of the prior art cited above.

In particular, an aim of the present invention is to provide a process for making a coating for furniture enabling the desired ornamental effects to be achieved with reduced production costs and reduced time.

It is a further aim of the present invention to propose a process for making a coating for furniture allowing the coverings to be mass-produced.

The technical task mentioned and the aims specified are substantially achieved by a process for making a coating for furniture comprising the technical features set out in one or more of the appended claims.

Further features and advantages of the present invention will become more apparent from the description given by way of non-limiting example of a preferred but not exclusive embodiment of a process for making a coating for furniture, as diagrammatically illustrated in the accompanying drawings, in which:
- Fig. 1 shows first steps in succession of the process according to the invention;
- Fig. 2 is a cross-sectional view of a semifinished product obtained at the end of the steps shown in Fig. 1;
- Fig. 3 shows a further step of the process of the invention;
- Fig. 4 is a cross-sectional view of the semifinished product at the end of the step shown in Fig. 3;
- Fig. 5 depicts a further step of the process according to the invention;
- Fig. 6 is a cross-sectional view of the finished coating or covering obtained at the end of the step depicted in Fig. 3; and
- Fig. 7 is a perspective view of the finished coating seen in Fig. 6.

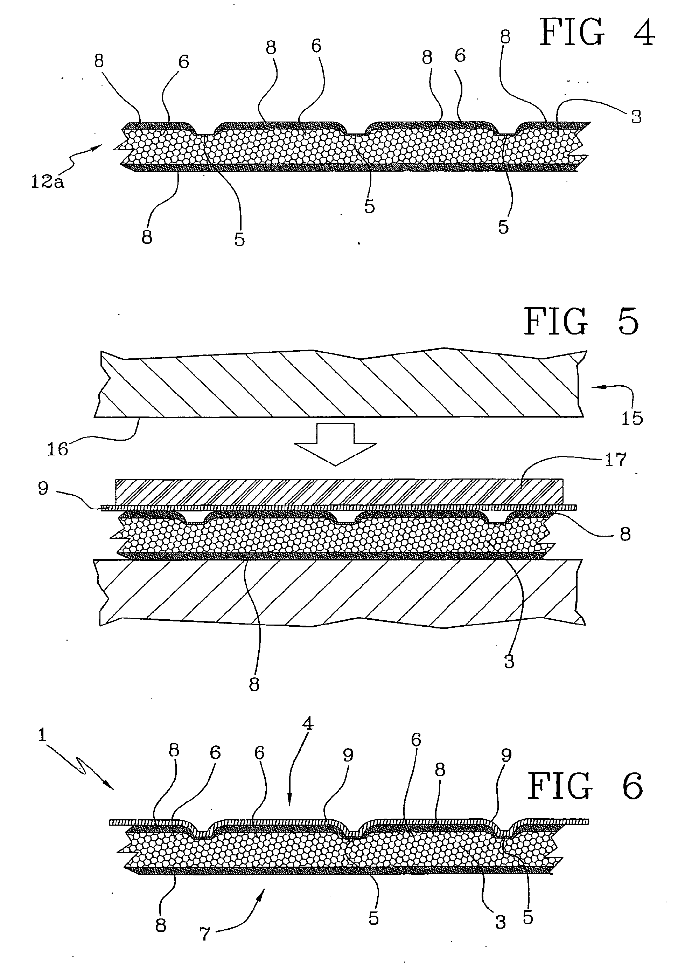

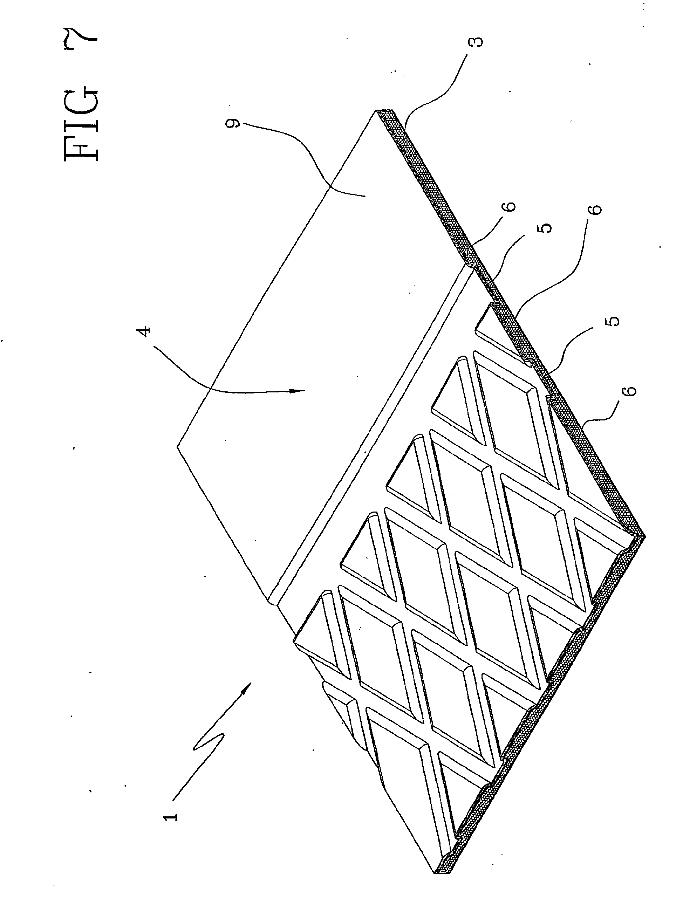

With reference to the accompanying drawings, a coating for furniture such as armchairs, sofas, poufs, bed structures, etc. for example, made following the process in accordance with the present invention, has been generally identified with reference numeral 1 and partly illustrated in Figs. 6 and 7. Coating 1 is disposed, also in a removable manner, on the furniture structure, forming the surface finishing of the furniture, to give it a particular aesthetic effect. Coating 1 may cover the rigid structure, made of wood for example, of a bed or a chair or it may be disposed over the padding of an armchair or a sofa.

In the non-limiting embodiment shown, coating 1 comprises a layer of thermoformable plastic foam 3 which is provided with depressions 5 and corresponding elevations 6 suitably shaped on a first face 4 thereof. The depressions 5 and elevations 6 define three-dimensional surface shapes adapted to give the aforesaid aesthetic effect to the furniture surface onto which the coating is applied.

The layer of thermoformable plastic foam 3, once heated to a predetermined temperature, is able to maintain the shape that it has received by deformation, as described in greater detail in the following.

Preferably, the thermoformable plastic foam 3 is crosslinked polyethylene foam. Alternatively, the thermoformable plastic foam 3 used can be ethylene-vinylacetate (EVA).

A plastic cling layer 8 is applied both to the first face 4 and to a second face 7 of the layer of thermoformable plastic foam 3.

This cling layer 8 is preferably of the plastic type, in particular a fabric of synthetic fibres such as nylon, and spandex (lycra^{®}), for example.

In addition, a finish layer 9 is applied to the first plastic cling layer of the first face 4, by gluing. Preferably, the finish layer consists of hide, leather or also fabric.

Irrespective of the specific material used, the cling layer 8 must be adapted to be joined to the lower thermoformable plastic foam 3, partial melting of which is caused as described in greater detail in the following, and to be glued to the upper finish layer 9.

Both the cling layer 8 and the finish layer 9 follow the shape of the depressions 5 and elevations 6 of the layer of thermoformable plastic foam 3. The surface in sight of coating 1, once application to the piece of furniture has occurred, is the finish layer 9 copying the development of the three-dimensional surface shapes. The second face 7 is not visible and faces the furniture structure.

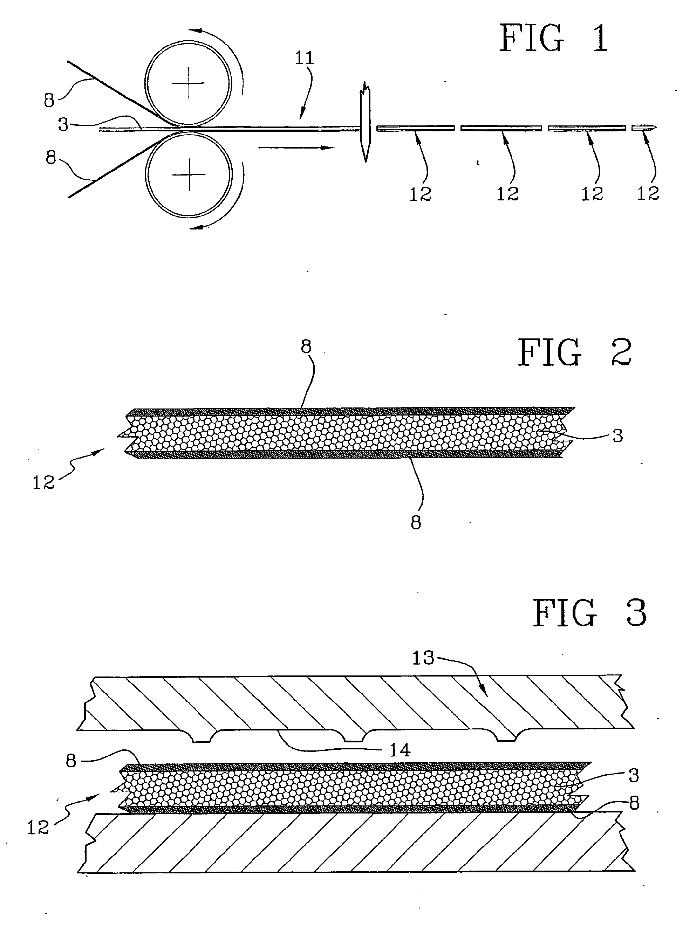

For obtaining coating 1, a continuous strip of thermoformable plastic foam 3 is fed between a pair of rollers 10. In addition between each of the two rollers 10 and the continuous strip of thermoformable plastic foam 3, a continuous strip of the cling layer 8 is also fed. Before passing between rollers 10, the continuous strip of thermoformable plastic foam 3 is heated, by means of a flame not shown for example, for melting the surface portion of said foam 3. Rollers 10 press the cling layers 8 against the layer of thermoformable plastic foam 3 causing the two elements to be joined together and consequently formation of a continuous semifinished product 11. The continuous semifinished product 11 emerging from rollers 10 is subsequently cut to pieces 12 the sizes of which are calculated based on the different coatings to be obtained (Figs. 1 and 2). Each semifinished product 12 is subsequently submitted to a thermoforming operation to create the depressions 5 and elevations 6.

Preferably, each semifinished product 12 is first introduced into an oven, not shown, until bringing it to a predetermined temperature, typically included between about 120°C and 140°C, and then disposed in a shaped mould 13. Mould 13 comprises a die, shown in Fig. 3, provided with a forming surface 14, the shape of which matches that of the depressions and elevations to be transferred onto the semifinished product 12. Alternatively, the mould itself could be heated.

Surface 14, pressed against the semifinished product 12 brought to the predetermined temperature, causes the permanent set of the layer of thermoformable plastic foam 3 which maintains the shape it has been given, shown for example in Fig. 4, even once it has been removed from the mould and cooled.

During pressing, preferably the semifinished product 12 is further cut out following a predetermined peripheral edge, based on the piece of furniture to be covered. The cutting-out step can also be carried out at a different moment, before or after the thermoforming operation, for example.

The thermoformed semifinished product 12a is ready to be coupled to the finish layer 9. To this aim, a layer of glue, not shown in the figures, is laid on a face of the finish layer 9 and/or on the cling layer 8 disposed on the first face 4.

The layer of thermoformable plastic foam 3 and the finish layer 9 are positioned in a press 15 (Fig. 5) provided with a pressing surface 16 that is preferably not shaped, i.e. substantially plain (not conforming in shape to the depressions and elevations).

A yielding layer 17, preferably made of rubber, is positioned between the pressing surface 16 and the finish layer 9.

The pressing surface 16 exerts pressure against the yielding layer 17 that in turn exerts pressure against the finish layer 9. Deformation of the yielding layer 17 urges the finish layer 9 against the cling layer 8 both at the elevations 6 and at the depressions 5. Therefore, the finish layer 9 too, once glued (Figs. 6 and 7) copies the shapes of said depressions 5 and elevations 6.

The present invention reaches the intended purposes and achieves important advantages.

First of all, following the process according to the invention, coatings in particular of leather having three-dimensional surface shapes can be made without the execution of seams being required. Consequently, the coatings can be mass-produced and, as a result, the related times and costs for production of the pieces of furniture are greatly reduced. For making coatings having different three-dimensional surface shapes it is sufficient to change the die.

In addition, the presence of the cling layer that is joined to the layer of thermoformable plastic foam by pressure and heat allows finish layers of any material (hide, leather, fabrics, etc.) to be afterwards combined with the layer of thermoformable plastic foam by gluing.

Finally, by adopting the yielding layer in the mould, the finish layer will not be spoiled during gluing.

## Claims

1. A process for making a coating for furniture, comprising the following steps:
- providing a layer of thermoformable plastic foam (3);
- coupling, through heating and pressing, a cling layer (8) to at least one first face (4) of said layer of thermoformable plastic foam (3);
- forming depressions (5) and corresponding elevations (6) on said first face (4) by thermoforming;
- gluing a finish layer (9) on said plastic cling layer (8), said finish layer (9) copying the shape of said depressions (5) and elevations (6).

2. A process as claimed in claim 1, wherein the gluing step is carried out by applying glue between the cling layer (8) disposed on said at least first face (4) of said layer of thermoformable plastic foam (3) and the finish layer (9), disposing said layer of thermoformable plastic foam (3) and said finish layer (9) in a press (15) and pressing said finish layer (9) on said first face (4).

3. A process as claimed in the preceding claim, wherein the press (15) is not shaped and pressing is carried out by interposing a yielding layer (17) preferably of rubber, between the press and the finish layer (9).

4. A process as claimed in anyone of the preceding claims, wherein thermoforming is carried out by heating the cling layer (8) and the layer of thermoformable plastic foam (3) and pressing the plastic cling layer (8) and the layer of thermoformable plastic foam (3) in a shaped mould (13).

5. A process as claimed in the preceding claim, wherein the cling layer (8) and the layer of thermoformable plastic foam (3) are first heated in an oven and subsequently disposed in the shaped mould (13).

6. A process as claimed in anyone of the preceding claims, wherein the layer of thermoformable plastic foam (3) is selected from the group comprising: crosslinked polyethylene foam, ethylene-vinylacetate.

7. A process as claimed in anyone of the preceding claims, wherein the finish layer (9) is selected from the group comprising: hide, leather and fabrics.

8. A process as claimed in anyone of the preceding claims, wherein the cling layer (8) is a plastic layer, preferably a fabric, preferably selected from the group comprising: nylon, spandex.

## Patentansprüche

1. Verfahren zur Herstellung einer Beschichtung für Möbel, umfassend die folgenden Schritte:
- Bereitstellen einer Schicht thermoformbaren Schaumkunststoffs (3);
- Verbinden, durch Erhitzen und Pressen, einer Haftschicht (8) mit mindestens einer ersten Oberfläche (4) der Schicht thermoformbaren Schaumkunststoffs (3);
- Formen von Vertiefungen (5) und entsprechenden Erhöhungen (6) auf der ersten Oberfläche (4) durch Thermoformung;
- Kleben einer Deckschicht (9) auf die Kunststoffhaftschicht (8), wobei die Deckschicht (9) die Form der Vertiefungen (5) und Erhöhungen (6) nachahmt.

2. Verfahren nach Anspruch 1, wobei der Klebeschritt durch das Auftragen von Kleber zwischen die Haftschicht (8), die auf der mindestens ersten Oberfläche (4) der Schicht thermoformbaren Schaumkunststoffs (3) angeordnet ist, und die Deckschicht (9) ausgeführt wird, wobei die Schicht thermoformbaren Schaumkunststoffs (3) und die Deckschicht (9) in einer Presse (15) angeordnet werden und die Deckschicht (9) auf die erste Oberfläche (4) gepresst wird.

3. Verfahren nach dem vorangehenden Anspruch, wobei die Presse (15) nicht geformt ist und das Pressen durch das Dazwischenlegen einer nachgebenden Schicht (17), vorzugsweise aus Gummi, zwischen die Presse und die Deckschicht (9) ausgeführt wird.

4. Verfahren nach einem der vorangehenden Ansprüche, wobei die Thermoformung durch Erhitzen der Haftschicht (8) und der Schicht thermoformbaren Schaumkunststoffs (3) und Pressen der Kunststoffhaftschicht (8) und der Schicht thermoformbaren Schaumkunststoffs (3) in einem geformten Formwerkzeug (13) ausgeführt wird.

5. Verfahren nach dem vorangehenden Anspruch, wobei die Haftschicht (8) und die Schicht thermoformbaren Schaumkunststoffs (3) zuerst in einem Ofen erhitzt und anschließend im geformten Formwerkzeug (13) angeordnet werden.

6. Verfahren nach einem der vorangehenden Ansprüche, wobei die Schicht thermoformbaren Schaumkunststoffs (3) aus der Gruppe ausgewählt wird, umfassend: vernetzter Polyethylenschaum, Ethylenvinylacetat.

7. Verfahren nach einem der vorangehenden Ansprüche, wobei die Deckschicht (9) aus der Gruppe ausgewählt wird, umfassend: Fell, Leder und Gewebe.

8. Verfahren nach einem der vorangehenden Ansprüche, wobei die Haftschicht (8) eine Kunststoffschicht ist, vorzugsweise ein Gewebe, das vorzugsweise aus der Gruppe ausgewählt wird, umfassend: Nylon, Spandex.

## Revendications

1. Procédé pour réaliser un revêtement pour meuble, comprenant les étapes suivantes :
- formation d'une couche de mousse en plastique thermoformable (3) ;
- association, par chauffage et par pressage, d'une couche adhérente (8) à au moins une première face (4) de ladite couche de mousse en plastique thermoformable (3) ;
- formation d'enfoncements (5) et d'élévations correspondantes (6) sur ladite première face (4) par thermoformage ;
- collage d'une couche de finition (9) sur ladite couche adhérente en plastique (8), ladite couche de finition (9) copiant la forme desdits enfoncements (5) et desdites élévations (6).

2. Procédé selon la revendication 1, **caractérisé en ce que** l'étape de collage est réalisée en appliquant de la colle entre la couche adhérente (8), mise sur ladite au moins première face (4) de ladite couche de mousse en plastique thermoformable (3), et la couche de finition (9), en positionnant ladite couche de mousse en plastique thermoformable (3) et ladite couche de finition (9) dans une presse (15), et en pressant ladite couche de finition (9) sur ladite première face (4).

3. Procédé selon la revendication précédente, **caractérisé en ce que** la presse (15) n'est pas formée, et **en ce que** le pressage est réalisé en interposant une couche élastique (17), de préférence en caoutchouc, entre la presse et la couche de finition (9).

4. Procédé selon l'une quelconque des revendications précédentes, **caractérisé en ce que** le thermoformage est réalisé en chauffant la couche adhérente (8) et la couche de mousse en plastique thermoformable (3), et en pressant la couche adhérente en plastique (8) et la couche de mousse en plastique thermoformable (3) dans un moule à forme (13).

5. Procédé selon la revendication précédente, **caractérisé en ce que** la couche adhérente (8) et la couche de mousse en plastique thermoformable (3) sont d'abord chauffées dans un four, puis mises dans un moule à forme (13).

6. Procédé selon l'une quelconque des revendications précédentes, **caractérisé en ce que** la couche de mousse en plastique thermoformable (3) est choisie dans le groupe comprenant : mousse de polyéthylène réticulée, éthylène-acétate de vinyle.

7. Procédé selon l'une quelconque des revendications précédentes, **caractérisé en ce que** la couche de finition (9) est choisie dans le groupe comprenant : croûte de cuir, cuir et tissus.

8. Procédé selon l'une quelconque des revendications précédentes, **caractérisé en ce que** la couche adhérente (8) est une couche de plastique, de préférence un tissu, de préférence choisi dans le groupe comprenant : nylon, spandex.
